Europäisches Patentamt

European Patent Office

Office européen des brevets

(11) Numéro de publication: **0 401 100**
**A1**

# (12) DEMANDE DE BREVET EUROPEEN

(21) Numéro de dépôt: 90401416.4

(22) Date de dépôt: 28.05.90

(51) Int. Cl.5: **B60G 7/04, B60G 17/04**

(30) Priorité: 30.05.89 FR 8907482

(43) Date de publication de la demande:
05.12.90 Bulletin 90/49

(84) Etats contractants désignés:
**BE DE DK ES FR GB IT LU NL**

(71) Demandeur: **S.E.S.R. - SOCIETE EUROPEENNE DE SEMI-REMORQUES**
**44, rue François 1er**
**F-75008 Paris(FR)**

(72) Inventeur: **Rollet, Jean**
**2 rue Jean Bart**
**F-89000 Auxerre(FR)**

(74) Mandataire: **Kügele, Bernhard et al**
**NOVAPAT FRANCE 63 bis, boulevard Bessières**
**F-75017 Paris(FR)**

(54) **Perfectionnements apportés aux suspensions de semi-remorques.**

(57) La présente invention a pour objet une suspension d'une semi-remorque pour le transport mixte rail-route qui comprend des vérins hydrauliques reliant des bras d'essieu au châssis et dans laquelle chaque bras d'essieu (3) comporte une butée de fin de course élastique (8) propre à coopérer avec une contre-butée (9) portée par le châssis (1) de la semi-remorque.

Selon l'invention, la contre-butée (9) est montée pivotante par rapport au châssis (1) et porte un doigt (13) propre à retenir un élément (12) solidaire de l'essieu (4) lorsque celui-ci est en position haute. La suspension comprend des moyens (11) pour faire pivoter la contre-butée (9) et libérer ainsi ledit élément (12), donc l'essieu.

FIG.1

EP 0 401 100 A1

La présente invention concerne une suspension de semi-remorque qui comprend des vérins hydrauliques reliant des bras d'essieu au châssis et plus particulièrement une suspension pour une semi-remorque devant être transportée par voie ferroviaire.

La suspension selon l'invention dans laquelle chaque bras d'essieu comporte une butée de fin de course élastique propre à coopérer avec une contre-butée portée par le châssis est caractérisée en ce que la contre-butée est montée pivotante par rapport au châssis et porte un doigt propre à retenir un élément solidaire de l'essieu lorsque celui-ci est en position haute, et en ce que la suspension comprend des moyens pour faire pivoter la contre-butée et libérer ainsi ledit élément, donc l'essieu. La contre-butée a ainsi une double fonction: coopérer avec la butée pour limiter la course des vérins lorsque la suspension est en position de route et assurer le maintien de l'essieu en position haute pour le transport ferroviaire.

Dans un mode de réalisation particulier de l'invention, les vérins de suspension sont alimentés par l'intermédiaire d'une vanne de mise à niveau pouvant être actionnée par un levier manuel par l'intermédiaire d'un câble sous gaine et l'extrémité de la gaine opposée au levier est portée par un bras articulé par rapport à l'essieu et soumis à l'action d'un ressort de rappel.

On a décrit ci-après, à titre d'exemple non limitatif, un mode de réalisation de la suspension selon l'invention avec référence au dessin annexé dans lequel :

La Figure 1 montre la suspension, l'essieu étant en position de route;

La Figure 2 est une vue semblable à la Figure 1, lors du relevage de l'essieu;

La Figure 3 est une vue semblable aux Figures 1 et 2, l'essieu étant en position rail.

Au dessin on voit le châssis 1 d'une semi-remorque sur lequel sont articulés en 2 deux bras latéraux 3 disposés chacun d'un côté du châssis et solidaires d'un même essieu 4. De chaque côté un vérin hydraulique 5 à double effet relie l'essieu 4 au châssis 1 en étant articulé en 6 sur le châssis et en 7 sur le bras 3 correspondant.

L'essieu 4 est solidaire, à chacune de ses extrémités, d'une butée d'attaque 8 en élastomère propre à coopérer avec une butée 9. Cette butée 9 est montée pivotante en 10 sur le châssis 1 et peut être basculée par un vase à air 11. Par ailleurs, chaque bras 3 est solidaire d'un crochet 12 qui peut venir agripper, lorsque l'essieu est en position rail et que la butée 11 est en position active, un doigt 13 porté par cette butée.

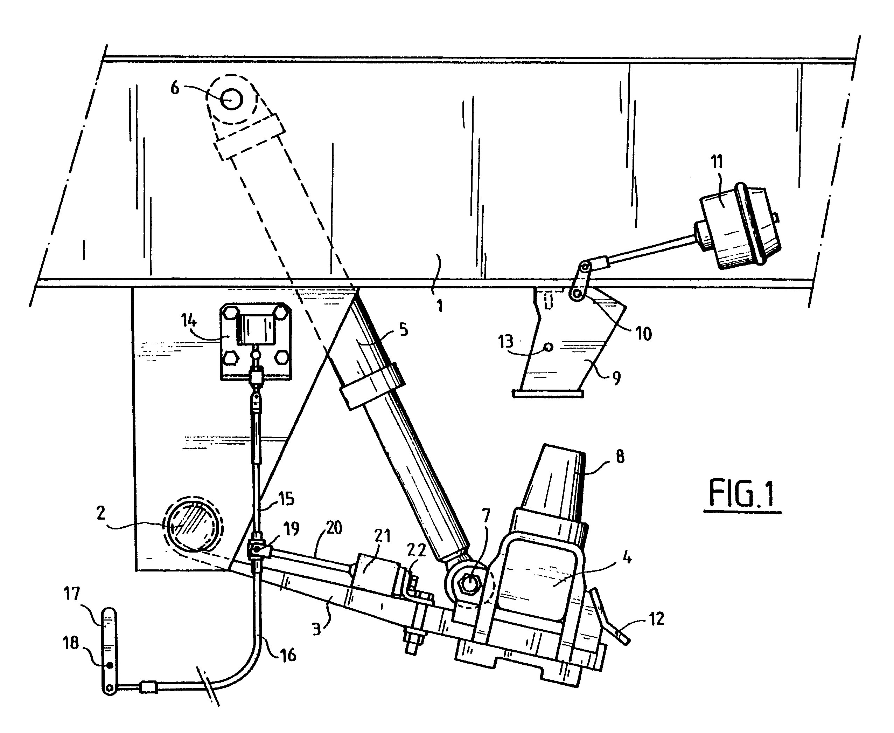

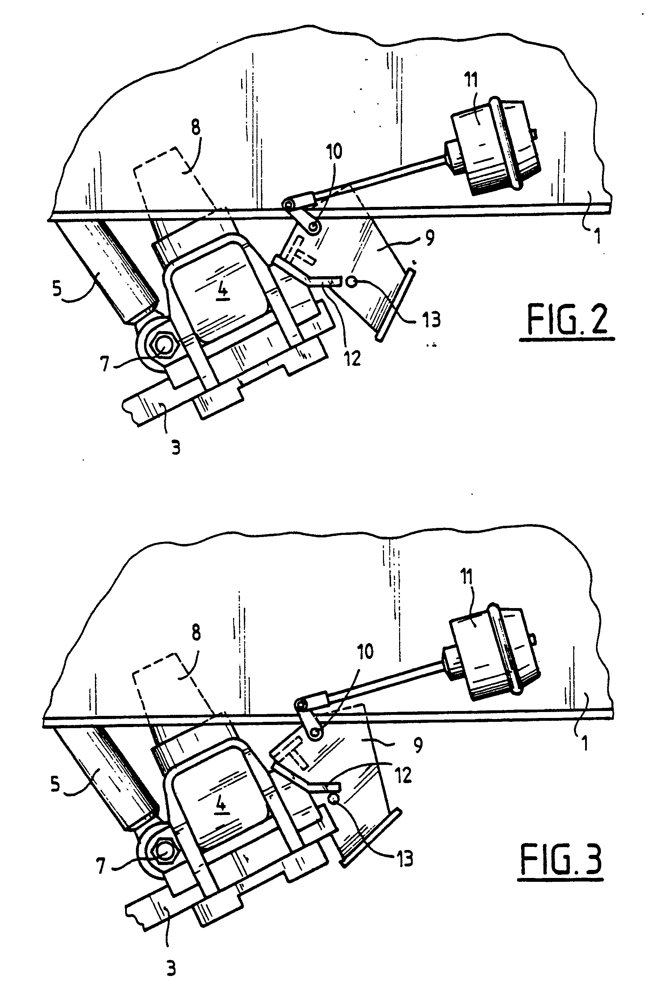

La Figure 1 montre l'essieu 4 en position basse de route. La butée 9 peut coopérer avec la butée 8 pour limiter la course de compression du vérin de suspension 5. A la Figure 2, le vase à air 11 a été alimenté, ce qui a fait pivoter la butée 9 et l'a amenée en position escamotée; l'essieu 4 peut ainsi être amené en une position haute située au delà de celle permise par la coopération des butées 8 et 9. A la Figure 3, la butée 9 a été ramenée en position active par coupure de l'alimentation du vase 11 et le crochet 12 prend appui sur le doigt 13, ce qui verrouille l'essieu en position haute.

Les vérins de suspension 5 sont alimentés par une vanne de mise à niveau 14. Cette vanne peut être commandée par un câble 15 sous gaine 16. L'une des extrémités de ce câble est fixée à un levier de manoeuvre 17 monté pivotant en 18 sur le châssis 1 de la semi-remorque: l'extrémité correspondante de la gaine 16 est fixée à ce châssis. A son autre extrémité, le câble 15 est attelé au tiroir de la vanne 14, de son côté la gaine 16 est articulée en 19 sur un bras 20 qui est ici constitué par une biellette et est articulé en 21 sur une patte 22 fixée au bras d'essieu 3 et est soumise à l'action d'un ressort de rappel non représenté.

Lorsque le conducteur manoeuvre le levier 17 par exemple pour remonter la suspension et amener l'essieu 4 en position rail, le tiroir de la vanne 14 est déplacé de façon à assurer la rétraction du vérin de suspension 5. Mais la course du câble 15 imposée par le levier 17, est supérieure à celle du tiroir de la vanne 14. Par suite, la gaine se déplace en entraînant la bielle 20 qui pivote vers le bas. Au fur et à mesure que l'essieu 4 monte, la bielle 20 revient à sa position initiale sous l'effet de son ressort de rappel; l'effort exercé sur le tiroir de la vanne est ainsi maintenu jusqu'à ce que la bielle 20 ait retrouvé sa position d'équilibre, sous l'effet de son ressort de rappel. Lorsque le conducteur désire amener l'essieu en position rail, il alimente tout d'abord le vase à air 11 de façon à amener la butée 9 en position escamotée. En fin de mouvement de remontée, il coupe l'alimentation du vase 11 pour verrouiller l'essieu 4 en position haute.

Pour ramener l'essieu 4 en position de route, on commence par augmenter un peu la pression dans les vérins 5 pour relever très légèrement l'essieu 4 et permettre le dégagement du crochet 12, puis on admet l'air dans le vase 11 pour libérer le crochet 12 et, par action sur le levier 17, on abaisse l'essieu 4 jusqu'au niveau choisi.

Il va de soi que la présente invention ne doit pas être considérée comme limitée au mode de réalisation décrit et représenté mais en couvre, au contraire, toutes les variantes.

## Revendications

1. Suspension d'une semi-remorque pour le transport mixte rail-route qui comprend des vérins hydrauliques reliant des bras d'essieu au châssis et dans laquelle chaque bras d'essieu (3) comporte une butée de fin de course élastique (8) propre à coopérer avec une contre-butée (9) portée par le châssis (1) de la semi-remorque,

caractérisée en ce que la contre-butée (9) est montée pivotante par rapport au châssis (1) et porte un doigt (13) propre à retenir un élément (12) solidaire de l'essieu (4) lorsque celui-ci est en position haute, et en ce que la suspension comprend des moyens (11) pour faire pivoter la contre-butée (9) et libérer ainsi ledit élément (12), donc l'essieu.

2. Suspension selon la revendication 1, caractérisée en ce que les vérins de suspension (5) sont alimentés par l'intermédiaire d'une vanne de mise à niveau (14) pouvant être actionnée par un levier manuel (17) par l'intermédiaire d'un câble (15) sous gaine (16) et en ce que l'extrémité de la gaine (16) opposée au levier (17) est portée par un bras (20) articulé par rapport à l'essieu (4) et soumis à l'action d'un ressort de rappel.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 187 149 (FRUEHAUF) <br> * Figures 1,2; abrégé * <br> --- | 1 | B 60 G 7/04 <br> B 60 G 17/04 |
| A | EP-A-0 237 385 (TRAILOR) <br> * Figures 1,5; abrégé * <br> --- | 1 | |
| A | EP-A-0 311 465 (PEUGEOT-CITROEN) <br> * Figures 1,6; colonne 1, lignes 6-24; colonne 3, lignes 3-20 * <br> ----- | 2 | |

**DOMAINES TECHNIQUES RECHERCHES (Int. Cl.5)**

B 60 G
F 16 F
B 62 D

Le présent rapport a été établi pour toutes les revendications

| Lieu de la recherche | Date d'achèvement de la recherche | Examinateur |
|---|---|---|
| LA HAYE | 28-08-1990 | TORSIUS A. |

EPO FORM 1503 03.82 (P0402)